# EUROPEAN PATENT APPLICATION

(11) **EP 4 484 744 A1**
(43) Date of publication of application: **01.01.2025**
(21) Application number: 23202718.5
(22) Date of filing: 10.10.2023
(51) Int. Cl.: F03D 7/02

(54) **METHOD FOR OPERATING A WIND TURBINE AND WIND TURBINE**

(30) Priority: 30.06.2023 EP 23382672
(71) Applicant: Nordex Energy Spain, S.A.U., 31395 Barasoain (Navarra) (ES); Nordex Energy SE & Co. KG, 22419 Hamburg (DE)
(72) Inventor: Gellermann, Jan, 22419 Hamburg (DE); Manitz, Jan Erik, 22419 Hamburg (DE); Gil, Pablo, 31395 Barasoain (ES)
(74) Representative: Völkl Siebenson Patentanwälte - Partnerschaft mbB

(57) **Abstract**

The method for operating a wind turbine (100) having a rotatable component (1 to 4) and at least two drives (di) for rotating the rotatable component by exerting torques comprises a step of providing first information (I1) which is representative of a position setpoint (Pn) of the rotatable component and a step of providing second information (I2) which is representative of the actual torque difference (ΔMa) between the actual torques exerted by the drives. In a further step, third information (I3) is provided which is representative of an external load (Me, Ve) acting on the rotatable component. In another step, fourth information (I4) is determined depending on the third information. The fourth information is representative of a torque difference setpoint (ΔMn) between the torques exerted by the drives. The torque difference setpoint depends on the external load. Furthermore, a step is executed in which operating setpoints (OS_i) are determined depending on the first, the second and the fourth information such that, when the drives are operated according to the operating setpoints, the drives bring or keep the rotatable component at the position setpoint by exerting torques. The operating setpoints are determined using a feedback loop with the second and the fourth information as input information so that the difference between torque difference setpoint and the actual torque difference is minimized.

## Description

The present disclosure relates to a method for operating a wind turbine. Furthermore, the disclosure relates to a computer program, a computer-readable data carrier, a control system and a wind turbine.

Wind turbines are widely known and are used to convert wind energy into electrical energy. Some components of the wind turbine, like the nacelle or the rotor blades, need to be rotated during operation, even at extreme conditions, like at high wind speeds.

One object to be achieved is to provide a method which contributes to a safe and efficient operation of the wind turbine, particularly during extreme conditions. Further objects to be achieved are to provide a computer program, a computer-readable data carrier, a control system and a wind turbine for executing such a method.

First, the method for operating a wind turbine is specified.

According to an embodiment, the method is for operating a wind turbine having a rotatable component and at least two drives for rotating the rotatable component by exerting torques. The method comprises a step of providing first information which is representative of a position setpoint of the rotatable component and a step of providing second information which is representative of the actual torque difference between the actual torques exerted by the drives. In a further step, third information is provided which is representative of an external load acting on the rotatable component. In another step, fourth information is determined depending on the third information. The fourth information is representative of a torque difference setpoint between the torques exerted by the drives. Furthermore, a step is executed in which operating setpoints for the drives are determined depending on the first, the second and the fourth information such that, when the drives are operated according to the operating setpoints, the drives bring or keep the rotatable component at the position setpoint by exerting torques. The operating setpoints are determined using a feedback loop with the second and the fourth information as input information so that the difference between the torque difference setpoint and the actual torque difference is minimized.

The present invention is, inter alia, based on the recognition that, particularly at low external loads, it can be useful to tension the drives against each other in order to reduce backlash movements of the drives and the associated damage and banging noise. Thus, the drives are operated such that they exert different torques. However, under extreme conditions, like at high external loads, it may be more beneficial to operate each drive with the maximum available torque instead of maintaining a torque difference.

The presented method for operating a wind turbine adapts the torque difference setpoint, i.e. the setpoint of the difference between the torques exerted by the drives, depending on the external load so that a beneficial operation of the drives is obtained for different situations.

The method specified herein is, in particular, a computer-implemented method, i.e. is performed with the help of a computer or a processor.

A setpoint herein defines a certain target to be achieved when operating the wind turbine. For example, the position setpoint is the target value of the position of the rotatable component and the torque difference setpoint is the target value of the absolute value of the difference between the torques of two drives. The operating setpoint defines the target operation of a drive. An operating setpoint for a drive is, in particular, equivalent to control/operation information for the drive.

Herein, when information is representative of a certain quantity or certain quantities, this means that the quantity or quantities can be extracted from the information, either directly, or the quantity/quantities can at least be derived from the information. In other words, the quantity/quantities is/are stored in the information, or at least data are stored in the information, from which the quantity/quantities can be derived or determined or calculated, respectively. Furthermore, here and in the following, information is, in particular, electronic information, like electronic data.

Furthermore, when torques are different, herein this means that the torques are set to be different, i.e. they are different by purpose.

The drives may each comprise an electric motor. Moreover, each drive may comprise a gearbox and a pinion. The electric motors apply an input rotational speed and an input torque to the gearbox, which is thereby transformed to an output rotational speed and an output torque and is applied to the pinion. By way of example, the transmission ratio between the input rotational speed and the output rotational speed of the gearbox of each drive is at least 100 or at least 1000. That is, the electric motor, on one side of the gearbox, rotates at least 100 or at least 1000 times faster than the pinion on the other side of the gearbox.

The drives may be attached to the rotatable component so that they rotate together with the rotatable component. For example, the drives then mesh with and exert torques to a non-rotatable element which in turn may cause the rotation of the rotatable component. Alternatively, the drives are rotationally fixed and do not rotate together with the rotational component. The drives may then mesh with the rotatable component and may exert torques to it, which can cause its rotation.

The first information is representative of a position setpoint of the rotatable component. The position setpoint is, in particular, an angle between 0° and 360°.

The second information is representative of the actual torque difference between the actual torques exerted by the drives. By way of example, the actual electric currents with which the electric motors are actually operated are determined and these currents are then stored in the second information. The actual electric currents may be determined from the PWM-signals transmitted to the drives by using a motor model. Indeed, the electric current is proportional to the torque so that the difference between the currents of the electric motors is representative of the difference between the torques. Alternatively, it is possible to directly measure the torques provided by the drives or the torque difference and to store these measurements in the second information.

The third information is representative of an external load acting on the rotatable component. The external load is, for example, the external torque acting on the rotatable component, e.g. induced by the wind acting on the wind turbine. Alternatively, the external load may be vibrations induced on the rotatable component, for example resulting from the rotation of the rotor of the wind turbine and/or resulting from changing wind speeds and/or resulting from tower movement. The external load is, in particular, a load which is not induced by the drives but against which the drives have to fight.

The third information may be determined depending on measurements. For example, the external load may be measured with the help of a separate sensor of the wind turbine. Alternatively, the third information may be representative of the sum of the electric currents with which the electric motors of the drives are actually operated. This sum is indicative of the sum of the torques which is provided by the drives and this, in turn, is indicative for the external load.

For example, for determining the third information, the measurements taken for determining the external load may be averaged over a certain time interval. The time interval is, for example, at least one second or at least 5 seconds or at least 10 seconds and/or at most 60 seconds or at most 30 seconds.

The fourth information is determined depending on the third information. Thereby, the fourth information is representative of a torque difference setpoint between the torques exerted by the drives, i.e. the target value between the torques exerted by the drives. The fourth information is, in particular, determined such that the torque difference setpoint depends on the external load, i.e. it changes with changing external load. For example, the torque difference setpoint is a function of the external load. The fourth information may be determined using a lookup table, wherein the lookup table stores different torque difference setpoints assigned to different external loads.

The operating setpoints for the drives are determined depending on the first, the second and the fourth information. Particularly, an operating setpoint is determined for each drive, wherein the operating setpoint assigned to a drive defines the operation of that drive. For each drive, the corresponding operating setpoint may be or may be representative of a current setpoint or a torque setpoint.

The operating setpoints are determined such that, when the drives are operated according to the operating setpoints, the drives bring or keep the rotatable component at the position setpoint by exerting torques. In other words, the operating setpoints are configured to cause an operation of the drives such that the drives bring or keep the rotatable component at the position setpoint by exerting torques. To bring or keep the rotatable component at the position setpoint means that the drives are operated such that the difference between the actual position of the rotatable component and the position setpoint is minimized. In other words, the rotatable component is kept in or brought to a position which corresponds to the position setpoint.

The operating setpoints are determined using a feedback loop, particularly a negative feedback loop, with the second and the fourth information as input information so that the difference between the torque difference setpoint and the actual torque difference is minimized. Particularly, the second and the fourth information are repeatedly or continuously provided and compared. Depending on this, the operating setpoints are repeatedly or continuously determined or adjusted, respectively, in order to make the actual torque difference to match the torque difference setpoint.

Determining the operating setpoints depending on the second and the fourth information by using the feedback loop may be realized with the help of a controller, herein also called "tension controller". The tension controller is, for example, a proportional (P-) controller. For example, depending on the deviation between the actual torque difference and the torque difference setpoint, the tension controller determines at least one actuating variable. The operating setpoints may be representative of this actuating variable and/or may be determined depending on this actuating variable. By being operated according to the operating setpoints, the operation of the drives can then be adjusted according to the actuating variable.

According to a further embodiment, the third information is representative of the external torque acting on the rotatable component. For example, wind acting on the wind turbine induces external torque onto the rotatable component. The drives have to fight against this wind in order to bring or keep the rotatable component at the position setpoint.

According to a further embodiment, the fourth information is determined such that the torque difference setpoint decreases with increasing external torque. For example, the torque difference setpoint is a monotone function of the external torque. The benefit of this is, inter alia, that at very high external torques the full power of all drives can be used to fight against the external torque and no torque is lost because of a predefined torque difference.

According to a further embodiment, the torque difference setpoint is kept at a constant value and/or above a minimum value as long as the external torque is below or equal to a first threshold value. For example, below the first threshold value, the torque difference setpoint is at least 1% or at least 5% or at least 10% of |Mmax|, wherein Mmax is the value of the maximum torque which can be provided by a single drive. Additionally, below the first threshold value, the torque difference setpoint may be at most 70% or at most 50% of |Mmax|. For example, below the first threshold, the torque difference setpoint may be between 5 Nm and 30 Nm, particularly between 5 Nm and 15 Nm, e.g. 10 Nm. Herein, when concrete values for the torques of the drives or for the torque difference of the drives are specified, these values refer, for example, to the input torques supplied to the gearboxes, i.e. the torques as provided by the electric motors and before the torques a transformed by the gearboxes. For example, the first threshold value corresponds to an average torque exerted by the drives which is between 30% and 80% or between 30% and 50% of Mmax. For example, the first threshold value corresponds to an average torque of the drives between 40 Nm and 80 Nm, e.g. between 50 Nm and 70 Nm, like 60 Nm.

According to a further embodiment, the torque difference setpoint is reduced with increasing external torque when the external torque is above the first threshold value and below or equal to a second threshold value. For example, the torque difference setpoint then linearly decreases with increasing external torque. For example, the second threshold value corresponds to an average torque of the drives which is between 50% and 90% or between 50% and 80% of Mmax. The second threshold value corresponds, for example, to an average torque of the drives which is between 60 Nm and 100 Nm, e.g. between 70 Nm and 90 Nm, like 80 Nm.

According to a further embodiment, the torque difference setpoint is kept at a constant value and/or below a maximum value when the external torque is above the second threshold value. For example, above the second threshold value, the torque difference setpoint is kept at a value between 0% of Mmax and 5 % of Mmax, such as between 0 Nm and 10 Nm, e.g. at 0 Nm.

According to a further embodiment, the third information is representative of externally induced vibrations of the rotatable component. For example, when the rotor of the wind turbine rotates or the tower of the wind turbine bends, undesired vibrations of the rotatable component may be induced. The third information may be determined depending on measurements, e.g. of the bending moments of the rotor blades and/or the acceleration of the top of the tower.

According to a further embodiment, the fourth information is determined such that the torque difference setpoint increases with increasing externally induced vibrations of the rotatable component. The benefit of this is, inter alia, that high vibrations of the rotatable component can be suppressed in this way. The higher the torque difference between the drives, the more external force is needed to set the rotatable component into vibrations. Since vibrations can cause damage to the rotatable component, it may be beneficial to act against vibrations of the rotatable component.

According to a further embodiment, the method comprises a step of providing fifth information which is representative of rotational speed setpoints of the drives. The rotational speed setpoints are the target values of the rotational speeds of the drives for bringing or keeping the rotatable component at the position setpoint. For example, the fifth information is determined depending on the first information. That is, the rotational speed setpoints may be determined depending on the position setpoint.

The "rotational speeds of the drives" herein means, in particular, the rotational speeds as input into the gearboxes, i.e. as provided by the electric motors.

According to a further embodiment, the method comprises a step of providing sixth information which is representative of the actual rotational speeds of the drives. The actual rotational speeds of the drives may be determined with the help of measurements. For example, incremental encoders may be used to measure the rotational speeds of the drives.

According to a further embodiment, the operating setpoints are determined also depending on the fifth and the sixth information, i.e. the fifth and the sixth information are used additionally to the first, second and fourth information. Particularly, the operating setpoints are determined by using further feedback loops with the fifth and the sixth information as input information so that the differences between the actual rotational speeds and the corresponding rotational speed setpoints are minimized. The feedback loops are, in particular, negative feedback loops. For example, the fifths and sixth information are repeatedly or continuously provided and compared. Depending on this, the operating setpoints are determined repeatedly or continuously in order to make the actual rotational speeds to match the rotational speed setpoints.

By way of example, each of the drives is assigned a controller, like a PI (proportional-integral) controller, which are herein also called "speed controllers". The speed controllers may then determine actuating variables, depending on the deviations between the actual rotational speeds and the rotational speed setpoints. The operating setpoints are then these actuating variables, for example.

According to a further embodiment, the method comprises the step of determining seventh information depending on the second and the fourth information. The seventh information is representative of an offset rotational speed and the offset rotational speed depends on the difference between the torque difference setpoint and the actual torque difference. The offset rotational speed is, in particular, a target difference between the rotational speeds of the drives. The greater the difference between the torque difference setpoint and the actual torque difference, the greater the offset rotational speed.

Determining the seventh information may be done by the above-mentioned tension controller. By way of example, the offset rotational speed is the actuating variable determined with the tension controller.

According to a further embodiment, the fifth information is determined depending on the seventh information such that the rotational speed setpoint of at least one drive is the rotational speed setpoint of another drive minus the offset rotational speed. By way of example, if the actual torque difference is much smaller than the torque difference setpoint, the offset rotational speed is determined to be comparatively large and, accordingly, the rotational speed setpoints of the drives are much different. On the other hand, if the actual torque difference is equal to the torque difference setpoint, then the offset rotational speed may be smaller or may be zero.

According to a further embodiment, the method comprises a step of providing eighth information which is representative of the actual position of the rotatable component. The eighth information may be determined depending on measurements. For example, the rotational position of the rotatable component is determined with the help of an incremental encoder.

According to a further embodiment, the operating setpoints are determined also depending on the eighth information. For example, this is done by using a further feedback loop, particularly a negative feedback loop, with the first and the eighth information as input information so that the difference between the actual position and the position setpoint is minimized. That is, also the eighth information and, if applicable, the first information may be repeatedly or continuously provided and, accordingly, the operating setpoints are repeatedly or continuously determined and generated depending on the first and the eighth information in order to make the actual position to match the position setpoint.

This feedback loop may be realized with the help of a further controller, herein also referred to as "position controller". Depending on the deviation between the actual position and the position setpoint, the position controller determines actuating variables, wherein the operating setpoints may be determined depending on these actuating variables. The actuating variables are, for example, the rotational speed setpoints.

According to a further embodiment, the wind turbine comprises at least three or at least four drives, for example six drives, for rotating the rotatable component. The drives may be assigned to two different groups, namely a first group and a second group. Each group may be assigned the same number of drives. The operating setpoints may be determined such that, when they are used for operating the drives, all drives in the first group exert the same torques. Likewise, the operating setpoints may be determined such that, when they are used for operating the drives, all drives in the second group exert the same torques. Particularly, the rotational speed setpoints may be equal for all drives in the first group and equal for all drives in the second group.

Alternatively, however, the operating setpoints may be determined such that, when the drives are operated with them, at least three drives or all drives exert different torques, at least temporarily. For example, when operated with the operating setpoints each two drives exert different torques. For example, the fourth information is representative for several torque difference setpoints. For example, one drive is treated as a master drive and the torque difference setpoint for each drive refers to the torque difference between the drive and the master drive.

Also in this case, the torque difference setpoints for the drives may depend on the external load. The concept described herein for operating two drives depending on a variable torque difference setpoint can be extended to several drives.

According to a further embodiment, the rotatable component is a component of a yaw system of the wind turbine. For example, the rotatable component is a nacelle of the wind turbine or a carrier for a nacelle or a yaw bearing.

According to a further embodiment, the rotatable component is a component of a pitch system of the wind turbine. For example, the rotatable component is a rotor blade of the wind turbine or a carrier for a rotor blade or a pitch bearing.

Next, the computer program, the computer-readable data carrier and the control system are specified.

According to an embodiment, the computer program comprises instructions which, when the program is executed by a control system, cause the control system to carry out the method for operating a wind turbine according to any one of the embodiments described herein.

According to an embodiment, the computer-readable data carrier has the computer program stored thereon.

According to an embodiment, the control system comprises means configured to execute the method for operating a wind turbine according to any one of the embodiments described herein. Particularly, the method is carried out when the above-mentioned computer program is executed by the control system.

The control system may comprise at least one processor and/or at least one programmable logic controller, plc for short. Additionally, the control system may comprise one or more drive control modules which convert the operating setpoints into actual electric signals, e.g. PWM signals, with which drives are then controlled. The control system may be part of the wind turbine.

According to an embodiment, the control system comprises means with the help of which the second and the third information are determinable. Particularly the external load acting on the rotatable component and the actual torque difference between the actual torques exerted by the drives can be determined with the help of these means. The means may be the current sensors of the one or more drive control modules. As mentioned above, the actual torques or actual torque differences can be derived from the electric currents.

Alternatively, the control system may comprise particular means, like sensors, with the help of which the external load and/or the actual torque difference and/or the actual torques are directly determinable.

According to a further embodiment, the control system further comprises means, particularly sensors, with the help of which the actual rotational speeds of the drives are determinable. For example, the control system comprises incremental encoders, particularly one incremental encoder for each drive.

According to a further embodiment, the control system further comprises means, particularly a sensor, with the help of which the actual position of the rotatable component is determinable. For example, the control system comprises an incremental encoder assigned to the rotatable component.

Next, the wind turbine is specified.

According to an embodiment, the wind turbine comprises at least one rotatable component as well as at least two drives which are configured to rotate the rotatable component by exerting torques. The wind turbine further comprises the control system as specified herein. The control system is signally connectable or signally connected to the drives in order to enable an operation of the drives according to the operating setpoints.

Thus, the wind turbine is, in particular, configured to execute the method according to any of the embodiments described herein. When the method is executed, the drives are operated according to the operating setpoints.

The rotatable component of the wind turbine may be a component of the yaw system and/or the pitch system, like the nacelle or a nacelle carrier or a rotor blade or a rotor blade carrier.

Hereinafter, the method for operating a wind turbine, the control system and the wind turbine will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description thereof is not repeated for each of the following figures. For the sake of clarity, elements might not appear with corresponding reference symbols in all figures.

Figure 1 shows an exemplary embodiment of the wind turbine,

Figure 2 shows an exemplary embodiment of a yaw system in a perspective view,

Figure 3 shows an exemplary embodiment of a yaw system in a cross-sectional view,

Figure 4 shows an exemplary embodiment of a yaw system in a top view,

Figure 5 shows a flowchart of an exemplary embodiment of the method for operating a wind turbine,

Figure 6 shows a an exemplary embodiment of the control system,

Figures 7 and 8 show graphs further illustrating exemplary embodiments of the method for operating a wind turbine,

Figure 9 shows an exemplary embodiment of an operation of a drive control module.

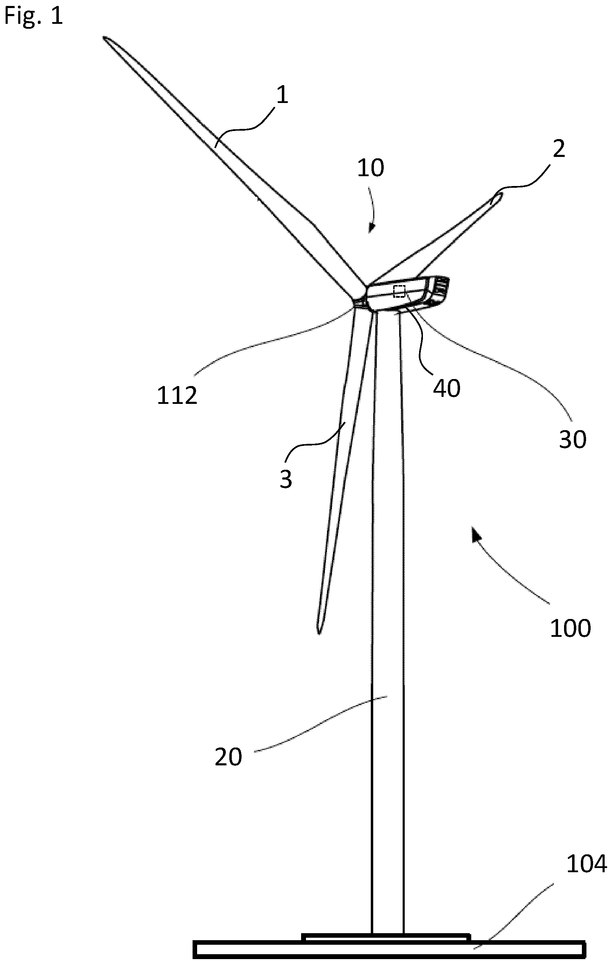

Figure 1 shows a wind turbine 100 which comprises a tower 20. The tower 20 is fixed to the ground by means of a foundation 104. A nacelle 40 is rotatably mounted at one end of the tower 20, opposite to the ground. The nacelle 40 comprises, for example, a generator which is coupled to a rotor 10 via a gearbox (not shown). The rotor 10 comprises three (wind turbine) rotor blades 1, 2, 3, which are arranged on a rotor hub 112, said rotor hub 112 being connected to a rotor shaft (not shown).

During operation, the rotor 10 is set in rotation by an air flow, for example wind. This rotational movement is transmitted to the generator via the drive train comprising, inter alia, the rotor shaft and the gearbox. The generator converts the mechanical energy of the rotor 10 into electrical energy.

For optimizing the energy output of the wind turbine 100, the nacelle 40 has to be rotated into the wind. Moreover, the pitch angles of the rotor blades 1, 2, 3 have to be set according to the wind speed. This is done with the help of drives (not shown) which rotate the rotor blades 1, 2, 3 and the nacelle 40 to a respective target position. In order to control and operate the drives, the wind turbine comprises a control system 30 which determines operating setpoints with which the drives are operated. The control system 30 is located in the nacelle 40.

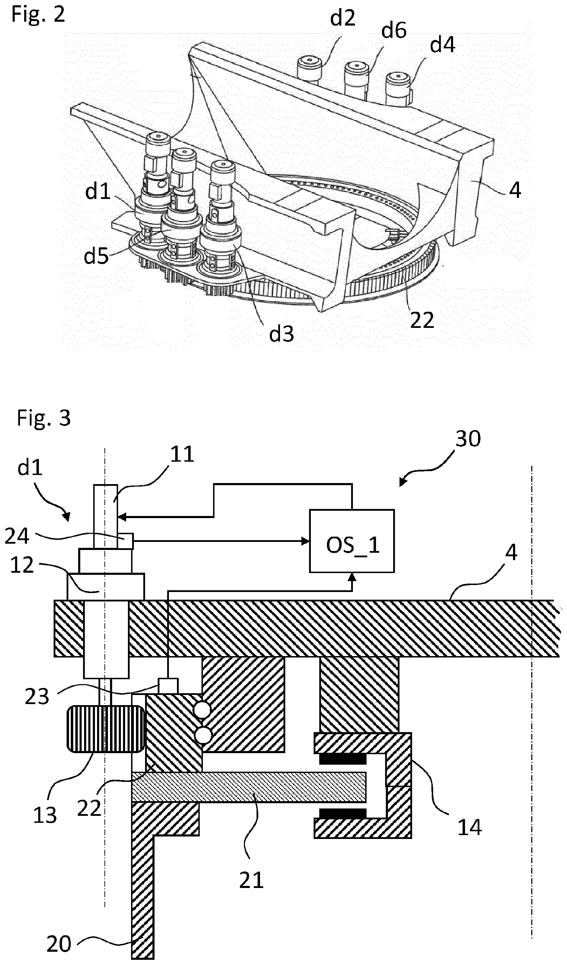

Figure 2 shows a detailed view of an exemplary embodiment of a yaw system, e.g. the yaw system of the wind turbine of figure 1. Here, the nacelle 40 itself is not shown, only the carrier 4 for the nacelle 40. This carrier 4 is rotatable together with the nacelle 40. In order to rotate the carrier 4, six drives d1 to d6 are mounted on the carrier 4. These drives d1 to d6 mesh with a yaw bearing 22 of the yaw system. The yaw bearing 22 is fixed with respect to, for example, the tower 20. The carrier 4 is rotated when the drives d1 to d6 rotate.

Figure 3 shows an exemplary embodiment of the yaw system, e.g. of the yaw system of figure 2, in more detail and in a cross-sectional view. The yaw bearing 22 is mounted on the tower 20. Moreover, a brake disk 21 is mounted to the tower 20. A brake caliper 14 is fixed to the carrier 4 and can be used to stop rotation of the carrier 4 and/or to hold the carrier 4 in position. The brake disk 21 and the brake caliper 14 are optional.

Figure 3 shows only one of the drives, namely drive d1. All other drives may be formed identically. Drive d1 comprises an electric motor 11. The electric motor 11 is operated depending on an operating setpoint OS_1 generated by the control system 30. Depending on the operating setpoint OS_1, drive d1 is rotated and thereby exerts a certain torque. The rotational speed and torque of the electric motor 11 is transmitted to a pinion 13 of the drive d1 with the help of a gearbox 12. The transmission ratio of the gearbox 12 is, for example, at least 100 or at least 500 so that the electric motor 11 rotates much faster than the pinion 13. On the other hand, the torque exerted by the pinion 13 onto the yaw bearing 22 is much larger than the torque provided by the electric motor 11.

In order to determine the actual position of the rotatable carrier 4, the control system 30 comprises an incremental encoder 23. The measurements taken with the help of the incremental encoder 23 are processed by the control system 30. Moreover, another incremental encoder 24 is provided, with the help of which the actual rotational speed of the electric motor 11 of drive d1 is determinable. These measurements are also processed by the control system 30. For each drive d1 to d6, an individual incremental encoder 24 may be provided.

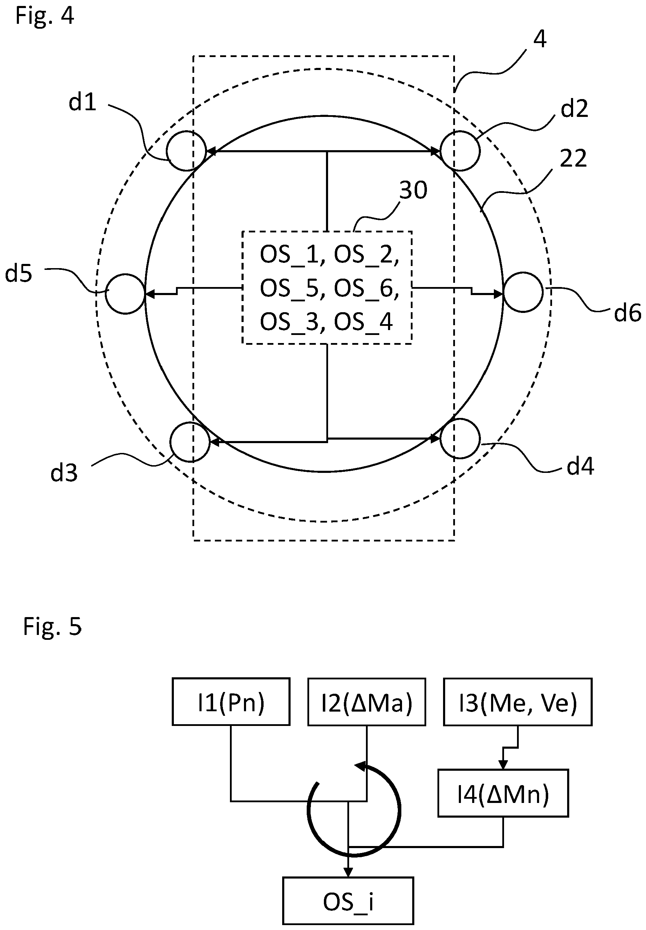

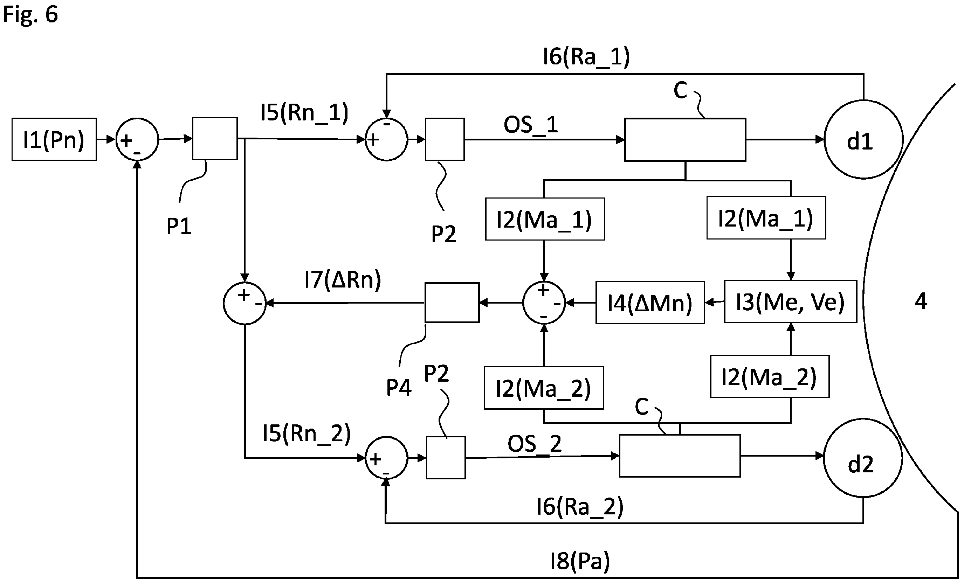

Figure 4 shows an exemplary embodiment of a yaw system, e.g. of the yaw system of figures 2 and 3, in top view. As can be seen here, all six drives d1 to d6 are operated according to corresponding operating setpoints OS_1 to OS_6, OS_i for short, determined with the control system 30. The operating setpoints OS_i may be configured such that different drives d1 to d6, di for short, exert different torques. How this can be achieved is explained in more detail in connection with figure 6.

A possible way to operate the yaw system of figures 2 to 4 is to group the drives into two groups. The left group or first group, respectively, comprises drives d1, d3 and d5. The right group or second group, respectively, comprises drives d2, d4 and d6. Drive d1 may be the master drive. The torques exerted by all other drives may be selected depending on the torque exerted by drive d1. For example, drives d3 and d5 are operated such that they always exert the same torque as drive d1. The drives of the right group, i.e. drives d2, d4 and d6, may be operated such that they always exert the same torques, but torques with absolute values or numeric values which are lower or at most the same as the absolute value or the numeric value of the torque of drive d1. The torques of the left side and of the right side may differ from each other by a torque difference setpoint, e.g. of 10 Nm.

By way of example, when no external torque acts onto the carrier 4 and the carrier 4 should be kept at a constant position, the left drives d1, d3, d5 are operated to each exert a torque trying to rotate the carrier 4 in clockwise direction and the right drives d2, d4, d6 are operated to each exert a torque trying to rotate the carrier 4 in counter-clockwise direction. Thus, a tensioning is achieved which can help prevent backlash movements of the drives.

On the other hand, when high external loads, like a high external torque, act on the carrier 4 and the carrier 4 should be kept at a constant position, the drives d1 to d6 have to fight against the external torque. In this case, the torque difference between the drives d1 to d6 may not be needed and may even reduce the total amount of torque which can be provided by all six drives. The now described method is based on these considerations.

Figure 5 shows an exemplary embodiment of the method for operating a wind turbine which addresses this problem. The method is described on the basis of the yaw system but can likewise be applied to the pitch system of the wind turbine.

In the method of figure 5, first information I1, second information I2 and third information I3 are provided. The first information I1 is representative of a position setpoint Pn of the carrier 4, i.e. a target position of the carrier 4.

The second information I2 is representative of an actual torque difference ΔMa between the drives d1 to d6. The actual torque difference ΔMa can be determined, for example, from the electric currents with which the electric motors 11 of the drives d1 to d6 are actually operated. By way of example, the actual torque difference ΔMa between drive d_1 and drive d_2 is determined and stored in the second information 12.

The third information I3 is representative of the external load Me, Ve acting on the carrier 4. This external load Me, Ve is induced, for example, by the wind acting on the rotor and/or the nacelle. The external load Me, Ve may be the external torque Me acting on the carrier 4. This external torque Me can be derived from the actual torques exerted by the drives d_1 to d_6 which, in turn, are again known from the actual electric currents with which the electric motors 11 are operated.

Additionally or alternatively, the external load may be externally induced vibrations Ve, e.g. due to the rotation of the rotor or the bending of the tower. This may be determined depending on a measured wind speed and/or a measured rotational speed of the rotor and/or measured bending moments of the rotor blades and/or measured acceleration of the top of the tower.

In a further step of the method, fourth information I4 is determined depending on the third information 13. The fourth information I4 is representative of a torque difference setpoint ΔMn, i.e. the target value of the torque difference, between the torques exerted by the drives. For example, the torque difference setpoint ΔMn is the target value of the torque difference between the left drives d1, d3, d5 and the right drives, d2, d4, d6. The torque difference setpoint ΔMn depends on the external load Me, Ve.

Operating setpoints OS_i for the different drives di are then determined depending on the first I1, the second I2 and the fourth I4 information. The operating setpoints OS_i are determined such that, when the drives di are operated according to the operating setpoints OS_i, the drives di bring or keep the carrier 4 at the position setpoint Pn by exerting torques. In order to minimize the difference between the actual torque difference ΔMa and the torque difference setpoint ΔMn, a negative feedback loop is used.

The described method provides, inter alia, the technical advantage that the torques exerted by the drives can be optimized depending on the actual conditions. At low wind speeds, for example, the tensioning as described above is useful in order to avoid backslash movements. At high wind speeds, it may be better to exploit the full power of each drive and, therefore, to dismiss the tensioning.

Figure 6 shows an exemplary embodiment of the control system 30 with which the described method can be executed. For better illustration, only the drives d1 and d2 are shown.

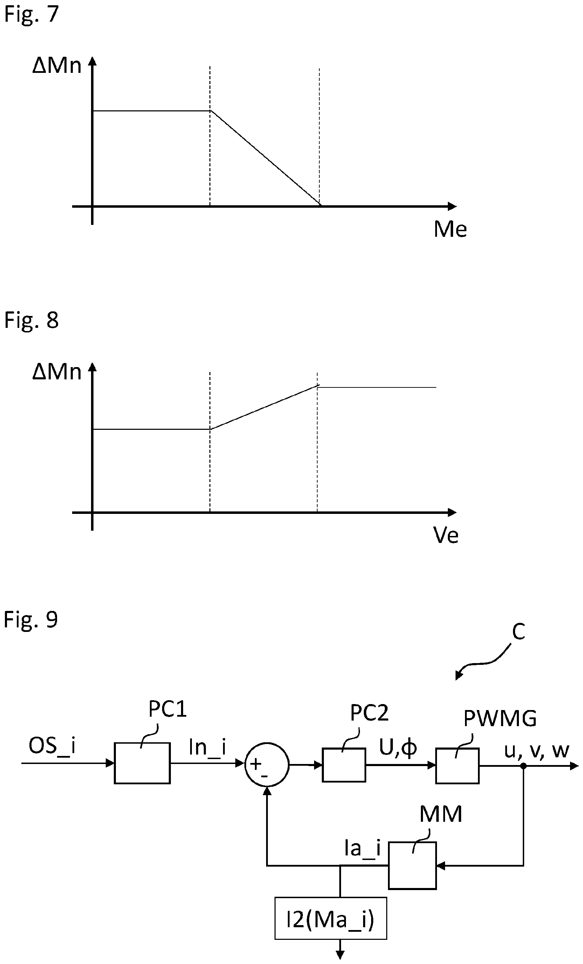

First information I1, which is representative of a position setpoint Pn of the carrier 4, is provided. Depending on this first information I1 and eighth information 18, a position controller P1 determines fifth information I5. The fifth information I5 is representative of rotational speed setpoints Rn_1 to Rn_6, Rn_i for short, of the drives di. Depending on this fifth information I5, speed controllers P2 determine and generate the operating setpoints OS_i, which are, e.g. torque setpoints. Drive control modules C convert the torque setpoints OS_i into actual electric signals with which the drives di are operated so that the drives di bring or keep the carrier 4 at the position setpoint Pn. The drive control modules C are explained in more detail in connection with figure 9.

The eighth information I8 is representative of the actual position Pa of the carrier 4 and can be determined, for example, with the help of the incremental encoder 23 as described in connection with figure 3. The eighth information I8 and the first information I1 are used in a negative feedback loop. From the deviation between the actual position Pa and the nominal Position Pn, the position controller P1 determines the fifth information I5.

Moreover, in order to achieve that the drives di rotate with the rotational speed setpoints Rn_i, sixth information I6 is provided which is representative of the actual rotational speeds Ra_i of the drives di. The sixth information I6 can be determined with the help of the incremental encoders 24, as explained in connection with figure 3. The sixth information I6 is used together with the fifth information I5 in negative feedback loops in order to minimize the respective differences between the rotational speed setpoints Rn_i and the actual rotational speeds Ra_i. The speed controllers P2 determine the operating setpoints OS_i depending on the deviation between the actual rotational speeds Ra_i and the rotational speed setpoints Rn_i.

As mentioned before, the drives d1, d2 may be operated such that they exert different torques. For this purpose, fourth information I4 is provided which is representative of a torque difference setpoint ΔMn. The torque difference setpoint ΔMn is compared to the actual torque difference ΔMa between the actual torques Ma_i of the drives. The actual torque difference ΔMa can be derived from second information I2 which is representative of the actual torques Ma_i of the drives di. The actual torques Ma_i of the drives di can be extracted from the drive control modules C used for operating the drives by using the electric signals with which the motors are actually operated.

Depending on the second I2 and the fourth I4 information, seventh information I7 is determined using a negative feedback loop. The seventh information I7 is representative of an offset rotational speed ΔRn and is determined with the help of a tension controller P4 depending on the deviation between the actual torque difference and the torque difference setpoint ΔMn. For example, the offset rotational speed ΔRn is determined such that it increases with increasing difference between the torque difference setpoint ΔMn and the actual torque difference.

As can be seen in figure 6, the offset rotational speed ΔRn is subtracted from the rotational speed setpoint Rn_1 determined for drive d1 and the resulting value of the rotational speed is used as the rotational speed setpoint Rn_2 for the drive d2. In this way, a torque difference can be realized between drive d1 and drive d2.

It is further shown in figure 6 that the fourth information I4 is actually determined depending on third information I3. The third information I3 is representative of the external load Me, Ve acting on the carrier 4. This external load can, for example, be determined using the second information I2 which is representative of the actual torques Ma_i exerted by the drives di or the actual electric currents, respectively. Additionally or alternatively, a separate sensor may be used to determine the external load Me, Ve.

Figures 7 and 8 illustrate how the torque difference setpoint ΔMn may depend on the external load Me, Ve.

In figure 7, the external load under consideration is the external torque Me acting on the carrier 4. As long as the absolute value of the external torque Me is below or equal to a first threshold value, indicated by the left dashed line in figure 7, the torque difference setpoint ΔMn is constant, e.g. 10 Nm. In the case that the external torque Me is above the first threshold value and below or equal to a second threshold value, indicated by the right dashed line in figure 7, the torque difference setpoint ΔMn linearly decreases until the value of 0 Nm. In the case that the external torque Me is above the second threshold, the torque difference setpoint ΔMn is constantly at 0 Nm.

Figure 8 shows the case where the external load under consideration is externally induced vibrations Ve. Here, when the amplitude of externally induced vibrations is below a first threshold value (left dashed line), the torque difference setpoint ΔMn is kept at a constant value. Between the first threshold value and a second threshold value (right dashed line), the torque difference setpoint ΔMn linearly increases with increasing externally induced vibrations. In this way the stiffness is increased. Above the second threshold value, the torque difference setpoint is kept at a constant value again.

Figure 9 illustrates the operation of a drive control module C. A current converter PC1 determines a current setpoint In_i depending on the operating setpoint OS_i which, in this example, is the torque setpoint. A further controller PC2 (e.g. a PI-controller) determines an absolute voltage value U and a phase shift φ depending on the current setpoint In_i and the actual current Ia_i. PWM-generators PWMG generate corresponding PWM signals with which IGBTs (not shown) are energized. The output thereof is three different phases u, v, w with which the drives di are then operated. Moreover, a motor model MM determines the actual current Ia_i, depending on the phases u, v, w. The actual current Ia_i and the current setpoint In_i are used in a negative feedback loop to adapt the voltage value U and the phase shift φ. Furthermore, the second information I2 is determined depending on the determined actual current Ia_i.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

### Reference sign list:

- 1: first rotor blade
- 2: second rotor blade
- 3: third rotor blade
- 4: nacelle carrier
- 10: rotor
- 11: electric motor
- 12: gearbox
- 13: pinion
- 14: break caliper
- 20: tower
- 21: brake disc
- 22: yaw bearing
- 23: incremental encoder
- 24: incremental encoder
- 30: control system
- 40: nacelle
- 100: wind turbine
- 104: foundation
- 112: rotor hub

- I1: first information
- I2: second information
- I3: third information
- I4: fourth information
- is: fifth information
- I6: sixth information
- I7: seventh information
- I8: eights information

- OS_i: operating setpoint
- di: drive
- Pn: position setpoint
- Pa: actual position
- ΔMn: torque difference setpoint
- ΔMa: actual torque difference
- Me: external torque
- Ve: externally induced vibrations
- Rn_i: rotational speed setpoint
- Ra_i: actual rotational speed
- Ma_i: actual torque
- ΔRn: rotational speed offset

- C: motor control module
- PC1: current converter
- PC2: further controller
- U: absolute voltage
- Φ: phase shift
- In_i: current setpoint
- Ia_i: actual current
- PWMG: PWM generator
- u, v, w: phases
- MM: motor model

## Claims

1. Method for operating a wind turbine (100) with a rotatable component (1 to 4) and at least two drives (di) for rotating the rotatable component (1 to 4) by exerting torques, wherein the method comprises the steps of
- providing first information (I1) which is representative of a position setpoint (Pn) of the rotatable component (1 to 4),
- providing second information (I2) which is representative of the actual torque difference (ΔMa) between the actual torques (Ma_i) exerted by the drives (di),
- providing third information (I3) which is representative of an external load (Me, Ve) acting on the rotatable component (1 to 4),
- determining fourth information (I4) depending on the third information (I3) wherein
- the fourth information (I4) is representative of a torque difference setpoint (ΔMn) between the torques exerted by the drives (di),
- determining operating setpoints (OS_i) for the drives (di) depending on the first (I1), the second (I2) and the fourth (I4) information
- such that, when the drives (di) are operated according to the operating setpoints (OS_i), the drives (di) bring or keep the rotatable component (1 to 4) at the position setpoint (Pn) by exerting torques,
- wherein the operating setpoints (OS_i) are determined using a feedback loop with the second (I2) and the fourth (I4) information as input information so that the difference between the torque difference setpoint (ΔMn) and the actual torque difference (ΔMa) is minimized.

2. Method according to claim 1, wherein
- the third information (I3) is representative of the external torque (Me) acting on the rotatable component (1 to 4),
- the fourth information (I4) is determined such that the torque difference setpoint (ΔMn) decreases with increasing external torque (Me).

3. Method according to claim 2, wherein
- the torque difference setpoint (ΔMn) is kept at a constant value as long as the external torque (Me) is below or equal to a first threshold value,
- the torque difference setpoint (ΔMn) is reduced with increasing external torque (Me) when the external torque (Me) is above the first threshold value and below or equal to a second threshold value,
- the torque difference setpoint (ΔMn) is kept at a constant value when the external torque (Me) is above the second threshold value.

4. Method according to any one of the preceding claims, wherein
- the third information (I3) is representative of externally induced vibrations (Ve) of the rotatable component (1 to 4),
- the fourth information (I4) is determined such that the torque difference setpoint (ΔMn) increases with increasing externally induced vibrations (Ve) of the rotatable component (1 to 4).

5. Method according to any one of the preceding claims, further comprising
- providing fifth information (I5) which is representative of rotational speed setpoints (Rn_i) of the drives (di) for bringing or keeping the rotatable component (1 to 4) at the position setpoint (Pn),
- providing sixth information (I6) which is representative of the actual rotational speeds (Ra_i) of the drives (di), wherein
- the operating setpoints (OS_i) are determined also depending on the fifth (I5) and the sixth (I6) information, namely by using further feedback loops with the fifth (I5) and the sixth (I6) information as input information so that the differences between the actual rotational speeds (Ra_i) and the corresponding rotational speed setpoints (Rn_i) are minimized.

6. Method according to claim 5, further comprising
- determining seventh information (I7) depending on the second (I2) and the fourth (I4) information, wherein
- the seventh information (I7) is representative of an offset rotational speed (ΔRn) and the offset rotational speed (ΔRn) depends on the difference between the torque difference setpoint (ΔMn) and the actual torque difference (ΔMa), wherein
- the fifth information (I5) is determined depending on the seventh information (I7) such that the rotational speed setpoint (Rn_2) of at least one drive (d2) is the rotational speed setpoint (Rn_1) of another drive (d1) minus the offset rotational speed (ΔRn).

7. Method according to any one of the preceding claims, further comprising
- providing eighth information (I8) which is representative of the actual position (Pa) of the rotatable component (1 to 4),
- the operating setpoints (OS_i) are determined also depending on the eighth information (I8), namely by using a further feedback loop with the first (I1) and the eighth (I8) information as input information so that the difference between the actual position (Pa) and the position setpoint (Pn) is minimized.

8. Method according to any one of the preceding claims, wherein
- the rotatable component (1 to 4) is a component (4) of a yaw system of the wind turbine (100).

9. Method according to any one of the preceding claims, wherein
- the rotatable component (1 to 4) is a component (1 to 3) of a pitch system of the wind turbine (100).

10. Computer program comprising instructions which, when the program is executed by a control system, cause the control system to carry out the method of any one of claims 1 to 9.

11. Computer-readable data carrier having the computer program of claim 10 stored thereon.

12. Control system (30) comprising means for executing the method according to any one of claims 1 to 9.

13. Control system (30) according to claim 12, wherein
- the control system (30) comprises means with the help of which the external load (Me, Ve) acting on the rotatable component (1 to 4) and the actual torque difference (ΔMa) between the actual torques (Ma_i) exerted by the drives (di) are determinable.

14. Control system (30) according to claim 12 or 13, further comprising means (23, 24) with the help of which
- the actual rotational speeds (Ra_i) of the drives (di) are determinable, and/or
- the actual position (Pa) of the rotatable component (4) is determinable.

15. Wind turbine (100) comprising
- at least one rotatable component (1 to 4),
- at least two drives (di) for rotating the rotatable component (1 to 4) by exerting torques,
- the control system (30) according to any one of claims 12 to 14, wherein
- the control system (30) is signally connected to the drives (di) in order to enable an operation of the drives (di) according to the operating setpoints (OS_i).
